Europäisches Patentamt

European Patent Office

Office européen des brevets

(11) Veröffentlichungsnummer: **0 319 735 B1**

(19)

# EUROPÄISCHE PATENTSCHRIFT

(12)

(45) Veröffentlichungstag der Patentschrift: **05.08.92**

(51) Int. Cl.⁵: **B60R 1/06**

(21) Anmeldenummer: **88118886.6**

(22) Anmeldetag: **12.11.88**

(54) Schwenkbarer Aussenrückspiegel insbesondere für Lastkraftfahrzeuge.

(30) Priorität: **05.12.87 DE 8716105 U**

(43) Veröffentlichungstag der Anmeldung:
**14.06.89 Patentblatt 89/24**

(45) Bekanntmachung des Hinweises auf die
Patenterteilung:
**05.08.92 Patentblatt 92/32**

(84) Benannte Vertragsstaaten:
**AT BE CH DE ES FR GB IT LI LU NL SE**

(56) Entgegenhaltungen:
**FR-A- 2 227 152**
**FR-A- 2 552 175**
**GB-A- 1 327 383**
**US-A- 1 358 159**

(73) Patentinhaber: **HOHE KG**
**Hauptstrasse 36**
**W-6981 Collenberg(DE)**

(72) Erfinder: **Eifert, Klaus**
**Ringstrasse 6**
**W-6985 Stadtprozelten(DE)**

(74) Vertreter: **Zinngrebe, Horst, Dr.rer.nat.**
**Saalbaustrasse 11**
**W-6100 Darmstadt(DE)**

## Beschreibung

Die Erfindung betrifft einen Außenrückspiegel für Fahrzeuge insbesondere Lastkraftwagen, mit einem einen verstellbaren Spiegel vorn und seitlich umgebenden Spiegelgehäuse und mit einem Haltebügel, an welchem das Spiegelgehäuse mittels zweier den Umfang eines Haltebügel-Abschnitts gemeinsam umgreifener Klemmstücke befestigt ist, wobei beide Klemmstücke an einer spiegelgehäusefesten Lasche befestigt sind (siehe z.B. GB-A-1 327 383).

Lastkraftwagen und Omnibusse werden häufig von mehreren Fahrern abwechselnd gefahren, von denen jeder eine andere Sitzposition hinter dem Lenkrad des Fahrzeugs erfordert. Die verschiedenen Sitzpositionen unterscheiden sich voneinander u.a. in der Höhe relativ zu einem fest an der Fahrertür befestigten Außenrückspiegel, so daß dieser auf die jeweilige Sitzposition vom Fahrer nachgestellt werden muß.

Zwar gibt es Außenrückspiegel, deren Spiegel innerhalb des Spiegelgehäuses elektrisch oder mechanisch vertikal verstellt werden kann. Um dem jeweiligen Fahrer die Verstellbarkeit des Spiegels nach oben oder unten, ausgehend von der für den Fahrer geeigneten Normallage, über einen jeweils gleichen Winkelbereich zu gewährleisten, ist es erwünscht, daß die Normallage sich etwa in der Mitte des Winkelbereichs befindet, über den der Spiegel nach oben oder unten elektrisch oder mechanisch verstellt werden kann. Die verschiedenen Sitzpositionen der Fahrer erfordern jedoch Normalstellungen des Spiegels, die den Winkelbereich der Spiegelverstellung nach oben oder unten einengen.

Bei dem in der Gebrauchsmusterschrift DE-U-82 09 925 dargestellten Außenrückspiegel ist das Spiegelgehäuse mittels eines Klemmstückes an dem vertikalen Abschnitt eines an einem Fahrzeug schwenkbar befestigten Haltebügels befestigt. Ferner ist ein Außenrückspiegel dieser Art bekannt geworden, bei dem das Klemmstück an einem zweiten Klemmstück verschraubt ist, wobei beide Klemmstücke zwischen sich den Haltebügelabschnitt umfassen. Das spiegelgehäuseseitige Klemmstück ist mittels eines Bolzens zwischen zwei beabstandeten spiegelgehäusefesten Laschen derart befestigt, daß nach Lösen des Bolzens das Spiegelgehäuse mit Spiegel nach oben oder unten schwenken kann.

Diese Befestigung des Spiegelgehäuses am Haltebügelabschnitt hat den Nachteil, daß sich der Bolzen aufgrund der während der Fahrt auftretenden Vibrationen leicht lockern kann, so daß das Spiegelgehäuse nicht mehr sicher genug in der eingestellten Position am Haltebügelabschnitt befestigt bleibt. Ferner sind die Klemmstücke, um ihre gegenseitige Unverdrehbarkeit zu gewährleisten, mit formschlüssigen Passungen versehen und daher relativ teure Gußstücke.

Demgegenüber liegt der Erfindung die Aufgabe zugrunde, bei dem eingangs genannten Außenrückspiegel eine Befestigungsvorrichtung zum Halten des Spiegelgehäuses am Haltebügelabschnitt zu schaffen, welche bei Bedarf ein Verschwenken des Spiegelgehäuses nach oben oder unten relativ zum Haltebügelabschnitt erlaubt und dennoch eine betriebssichere Beibehaltung der eingestellten Position des Spiegelgehäuses gewährleistet.

Bei dem eingangs genannten Außenrückspiegel ist dazu vorgesehen, daß die Klemmstücke mittels zweier in Richtung des Haltebügelabschnitts beabstandeter Bolzen an der Lasche befestigt sind, welche sich durch einen gebogenen, in den Klemmstücke oder in der Lasche ausgebildeten Längsschlitz erstrecken, der länger ist als der Abstand der Bolzen. Durch die Erfindung wird die Achse, um die das Spiegelgehäuse relativ zum Haltebügelabschnitt bei Bedarf nach oben oder unten verschwenkt werden kann, aus der Mitte der Bolzen heraus verlegt, was trotz Beibehaltung der gewünschten Verschwenkbarkeit ein sicheres Halten des Spiegelgehäuses in der eingestellten Position gewährleistet.

Der Krümmungsmittelpunkt des Längsschlitzes kann in zweckmäßiger Ausgestaltung der Erfindung in das Spiegelgehäuse verlegt sein. Die Befestigungsvorrichtung wird in Weiterbildung der Erfindung dadurch wesentlich vereinfacht, daß die beiden Klemmstücke plattenförmig ausgebildet sind, jeweils eine Längsrinne aufweisen und auf der vom Spiegelgehäuse abgewandten Seite des Haltebügelabschnitts verschraubt sind. Zweckmäßig ist in jedem Klemmstück ein Längsschlitz ausgebildet, wobei sich dann die Lasche zwischen die Klemmstücke erstrecken kann.

In bevorzugter Ausgestaltung der Erfindung steht die die Lasche von einem Tragrohr ab, an welchem das Spiegelgehäuse befestigt ist. Das Spiegelgehäuse weist vorteilhafterweise eine Öffnung auf, durch die sich die Lasche wenigstens teilweise erstreckt. Ferner kann auf den von den Klemmstücken umfaßten Teil des Haltebügelabschnitts eine die Lackierung des Haltebügels schützende Hülse aufgeschrumpft sein, die von den Klemmstücken beidseits umfaßt ist. Schließlich empfiehlt es sich, eine die Klemmstücke und die Lasche sowie gegebenenfalls die Spiegelgehäuseöffnung überdeckende Schutzkappe zum Schutz vor Witterungseinflüssen vorzusehen, die am Spiegelgehäuse zweckmäßig festgeklemmt, jedenfalls lösbar befestigt ist und zwei gegenüberliegende Öffnungen für den Haltebügelabschnitt aufweist.

Die Erfindung wird nachstehend an einem Ausführungsbeispiel anhand der beigefügten Zeichnung im einzelnen beschrieben.

Es zeigen:

Fig 1: eine Seitenansicht eines Außenrückspiegels mit Schutzkappe, teilweise im Vertikalschnitt;

Fig. 2 eine Draufsicht auf einen Teil des Außenrückspie gels nach Fig. 1, teilweise im Horizontalschnitt;

Fig. 3 einen Längsschnitt durch die Schutzkappe; und

Fig. 4 eine Ansicht der Schutzkappe von innen.

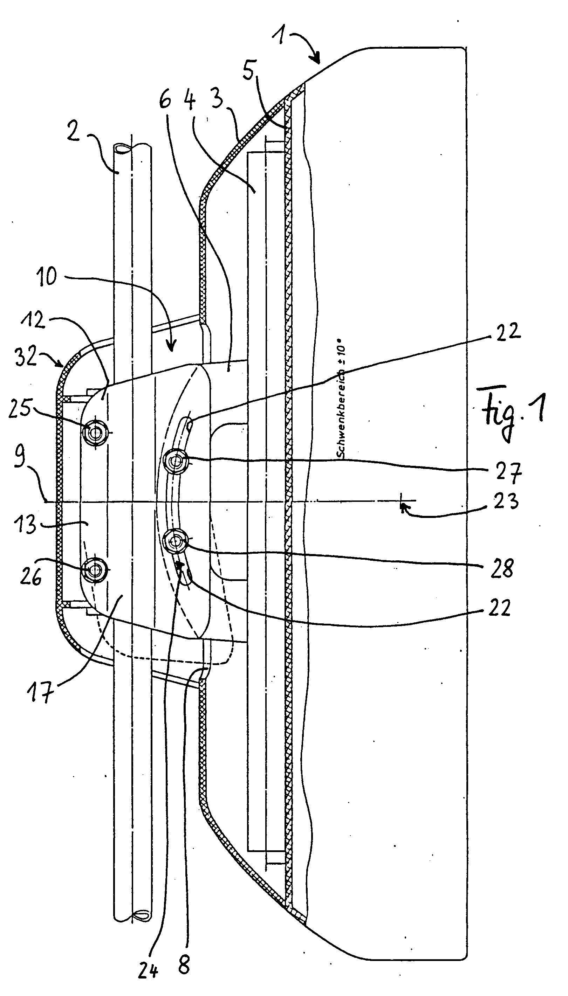

Das im Ganzen mit 1 bezeichnete Spiegelgehäuse umschließt in an sich bekannter Weise einen nicht dargestellten Spiegel, der gemäß Fig. 1 von rechts zur Betrachtung freiliegt. Das Spiegelgehäuse 1 ist in noch zu beschreibender Weise an einem in allgemeinen mittleren Abschnitt 2 eines Haltebügels befestigt, der etwa die in der Gebrauchsmusterschrift DE-U-82 09 925 oder die in der europäischen Patentanmeldung EP-A-0 226 747 dargestellte Form haben kann. Die beiden freien Enden des Haltebügels sind dazu bestimmt, wie insbsondere in der letztgenannten Schrift beschrieben, an der Fahrertür eines Fahrzeugs, insbesondere Lastkrafwagens oder Omnibusses, befestigt zu werden.

Ein hinterer, in Gebrauchslage des Außenrückspiegels in Fahrtrichtung weisender Teil 3 des Spiegelgehäuses 1 enthält ein Tragrohr 4, welches mittels nicht dargestellter Schellen an einem Zwischenboden 5 des Spiegelgehäuses 1 dauerhaft befestigt ist. An das Tragrohr 4 ist in seinem mittleren Abschnitt eine bügelförmige Lasche 6 angeschweißt, welche vom Tragrohr 4 nach rückwärts absteht und mit einem äußeren Abschnitt 7 aus einer mittleren Öffnung 8 des hinteren Teils 3 vorsteht. Wie in Fig. 1 zu erkennen ist, ist der äußere Abschnitt 7 leicht nach rückwärts gebogen und von dem Tragrohr 4 beabstandet. Die ebene, aus stahlgefertigte Lasche 6 ist im wesentlichen symmetrisch zu einer Mittellinie 9. Beiderseits der Mittellinie 9 durchdringt die Lasche je ein Durchgangsloch für noch zu erläuternde Bolzen.

Die im Ganzen mit 10 bezeichnete Befestigungsvorrichtung, mittels der das Spiegelgehäuse am Abschnitt 2 festgeklemmt ist, umfaßt ferner zwei gleich große, im wesentlichen plattenförmige Klemmstücke, nämlich ein erstes Klemmstück 12 und ein zweites Klemmstück 14. Das erste Klemmstück 12 besitzt, symmetrisch zur Mittellinie 9, zwei in Richtung des Abschnitts 2 beabstandete Durchganglöcher an dem von der Lasche 6 entfernt liegenden Rand 13 und einen gebogenen ersten Längsschlitz 22, der sich beiderseits der Mittellinie 9 symmetrisch zu dieser in dem der Lasche 6 benachbarten Teil des ersten Klemmstücks 12 erstreckt. Der Krümmungsmittelpunkt der kreisbogenförmigen Form des Längsschlitzes 22 liegt innerhalb des Spiegelgehäuses etwa im Bereich des nicht dargestellten Spiegels und ist mit 23 bezeichnet. In einem Zwischenabschnitt des ersten Klemmstücks 12 zwischen den Durchgangslöchern und dem Längsschlitz 22 ist eine Längsrinne 17 von solcher Form geprägt, daß sie an der Außenkontour des Abschnitts 2 flächig über etwa den halben Umfang anliegen kann.

Das zweite Klemmstück 14 besitzt mit den Durchgangsbohrungen des ersten Klemmstücks 12 fluchtende Durchgangsbohrungen sowie einen zweiten Längsschlitz 24, der genauso lang ist und in gleicher Weise gebogen ist wie der erste Längsschlitz 22. Auch liegt der Krümmungsmittelpunkt des zweiten Längsschlitzes am Krümmungsmittelpunkt 23. Hervorzuheben ist, daß die gesamte Länge jedes der beiden Längsschlitzes 22, 24 größer ist als der Abstand der Durchgangsbohrungen der Lasche 6. Wie in Fig. 1 dargestellt erstrecken sich beide Längsschlitze 22, 24 etwa symmetrisch zur Mittellinie 9.

Ein Zwischenabschnitt des zweiten im wesentlich plattenförmigen Klemmstücks 14 zwischen den Durchgangsbohrungen des Klemmstücks 14 und dem zweiten Längsschlitz 24 ist zu einer zweiten Längsrinne 19 geformt, welche die Außenkontour des Abschnitts 2 im wesentlichen flächig um die Hälfte des Umfangs des Abschnitts 2 umfassen kann.

Auf dem Abschnitt 2 ist über eine Länge, die wenigstens gleich der Länge der ersten Längsrinne 17 und der zweiten Längsrinne 19 ist, eine Kunststoffhülle 30 aufgeschrumpft, die zum Schutz der Lackierung des Abschnitts 2 dient.

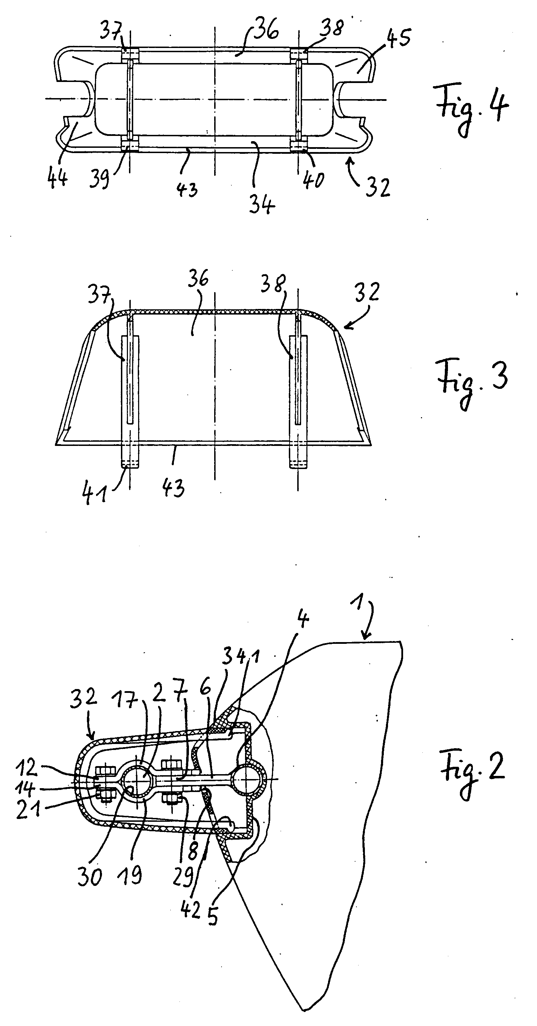

Zur Montage des Spiegelgehäuses 1 am Abschnitt 2 wird ein erster Bolzen 25 durch ein erstes Paar fluchtender Durchgangsbohrungen in den Klemmstücken 12, 14 sowie ein zweiter Bolzen 26 durch das zweite Paar Durchgangsbohrungen in den Klemmstücken 12, 14 hindurchgeführt. Jeder der beiden Bolzen wird durch eine von seinem freien Ende her aufgeschraubte Mutter 21 gesichert. Ein dritter Bolzen 27 wird durch den ersten Längsschlitz 22, die erste Durchgangsbohrung in der Lasche 6 und durch den zweiten Längsschlitz 24 geführt und durch eine Mutter 29 gesichert. Schließlich wird ein vierter Bolzen 28 durch den ersten Längsschlitz 22, die zweite Durchgangsbohrung in der Lasche 6 und durch den zweiten Längsschlitz 24 geführt und mit einer Mutter gesichert. Wenn alle vier Bolzen und Muttern angezogen werden, wie Fig. 2 darstellt, erstreckt sich die Lasche zwischen die spiegelgehäusenahen Abschnitte der Klemmstücke 12, 14 und beide Klemmstücke umfassen zwischen sich den Abschnitt 2 an dessen Umfang unter Zwischenlage der erwähnten Hülle 30. Man entnimmt der Fig. 1, daß die Bolzen 27, 28 längs des Abschnittes 2 etwa um die Hälfte der Länge der Längsschlitze 22, 24 beabstandet sind. Die Bolzen 25, 26 können wie dargestellt einen größeren Abstand zueinander aufweisen. Das Spiegelgehäuse 1 ist auf diese Weise fest an dem Abschnitt 2 angeklemmt.

Soll das Spiegelgehäuse in Anpassung an eine veränderte Sitzposition des nicht dargestellten Fahrers beispielsweise nach oben relativ zum Abschnitt 2 verschwenkt und dann arretiert werden, werden die Bolzen 27, 28 soweit gelockert, daß das Spiegelgehäuse 1 mit Lasche 6 entsprechend nach oben verschwenkt werden kann, wobei die Bolzen 27, 28 in den Längsschlitzen 22, 24 nach unten wandern. Nach Erreichen der gewünschten Schwenklage werden die Bolzen 27, 28 wieder angezogen. Wie aus in Figuren 1 und 2 zu erkennen ist, befinden sich die Bolzen 27, 28 außerhalb der Öffnung 8 und sind daher von außen frei zugänglich.

Um die Befestigungsvorrichtung 10 und das Innere des hinteren Teils 3 vor Witterungseinflüssen zu schützen, ist eine Schutzkappe 32 vorgesehen, welche die Klemmstücke 12, 14 und die Öffnung 8, und damit auch die Lasche 6 überdeckt. Aus den gegenüberliegenden Innenwänden 34, 36 sind je ein Paar in Längsrichtung der Schutzkappe 32 beabstandete, einwärts federnde Finger 37, 38, 39, 40 angeformt, welche an ihren freien Enden auswärts weisende Haken 41, 42 besitzen. Die Haken 41, 42 können den Rand der Öffnung 8 unter Spannung untergreifen derart, daß der untere Rand 43 der Schutzkappe 32 satt auf dem äußeren Rand der Öffnung 8 aufliegt. Die Schutzkappe 32 besitzt in den gegenüberliegenden schmaleren Seitenwänden 44, 45 je einen vom Rand 40 ausgehenden tiefen Einschnitt, der den Durchtritt des Abschnittes 2 durch die Seitenwände 44, 45 erlaubt.

Wie dargestellt sind die Längsschlitze 22, 24 bezüglich des Spiegelgehäuses 1 konkav gebogen; es liegt natürlich im Rahmen der Erfindung, den Längsschlitzen 22, 24 auch eine konvexe Krümmung zu geben, so daß der Krümmungsmittelpunkt dann auf der dem Spiegelgehäuse 1 gegenüberliegenden Seite des Abschnitts 2 liegt.

Der Schwenkbereich des Spiegelgehäuses 1 relativ zum Abschnitt 2 ist durch die Länge der Längsschlitze 22, 24 bestimmt und beträgt etwa 10 Grad zu jeder Seite der Mittellinie 9.

## Patentansprüche

1. Außenrückspiegel für Fahrzeuge insbesondere Lastkraftwagen, mit einem einen verstellbaren Spiegel vorne und seitlich umgebenden Spiegelgehäuse (1) und mit einem Haltebügel, an welchem das Spiegelgehäuse mittels zweier den Umfang eines Haltebügel-Abschnitts gemeinsam umgreifender Klemmstücke (12, 14) befestigt ist, wobei beide Klemmstücke an einer spiegelgehäusefesten Lasche (6) befestigt sind, dadurch gekennzeichnet, daß die Klemmstücke (12, 14) mittels zweier in Richtung des Haltebügelabschnitts (2) beabstandeter Bolzen (27, 28) an der Lasche (6) befestigt sind, welche sich durch einen gebogenen, in den Klemmstücken (12) oder in der Lasche (6) ausgebildeten Längsschlitz (22) erstrecken, der länger ist als der Abstand der Bolzen.

2. Außenrückspiegel nach Anspruch 1, dadurch gekennzeichnet, daß der Krümmungsmittelpunkt (23) des Längsschlitzes (22) im Spiegelgehäuse (1) liegt.

3. Außenrückspiegel nach Anspruch 1 oder 2, dadurch gekennzeichnet, daß die beiden Klemmstücke (12, 14) plattenförmig ausgebildet sind, jeweils eine Längsrinne (17, 19) aufweisen und auf der vom Spiegelgehäuse (1) abgewandten Seite des Haltebügelabschnitts (2) verschraubt sind.

4. Außenrückspiegel nach einem der vorstehenden Ansprüche, dadurch gekennzeichnet, daß die Lasche (6) von einem Tragrohr (4) absteht, an welchem das Spiegelgehäuse (1) befestigt ist.

5. Außenrückspiegel nach einem der vorstehenden Ansprüche, dadurch gekennzeichnet, daß das Spiegelgehäuse (1) eine Öffnung (8) aufweist, durch die sich die Lasche (6) wenigstens teilweise erstreckt.

6. Außenrückspiegel nach einem der vorstehenden Ansprüche, dadurch gekennzeichnet, daß eine die Klemmstücke (12, 14), die Lasche (6) sowie gegebenenfalls die Öffnung (8) des Spiegelgehäuses (1) überdeckende Schutzkappe (32) am Spiegelgehäuse lösbar befestigt, vorzugsweise angeklemmt ist, welche gegenüberliegende Öffnungen für den Haltebügel-Abschnitt (2) besitzt.

7. Außenrückspiegel nach einem der vorstehenden Ansprüche, dadurch gekennzeichnet, daß wenigstens der von den Klemmstücken (12, 14) umfaßte Teil des Abschnittes (2) von einer die Lackierung des Abschnittes schützenden Hülle (30) umgeben ist.

## Claims

1. An exterior rear view mirror for motor vehicles, more particularly lorries, comprising a mirror housing (1) enclosing at the front and side an adjustable mirror, and comprising a holding bracket to which the mirror housing is secured by means of two clamping pieces (12, 14) which jointly embrace the periphery of a holding bracket section, wherein the two clamping pieces are secured to a tongue (6) fixed to the mirror housing, characterised in that the clamping pieces (12, 14) are secured to the tongue (6) by means of two bolts (27, 28) which are spaced apart in the direction of the holding bracket section (2) and which extend through a curved elongated slot (22) formed in the clamping pieces (12) or in the tongue (6), which elongated slot is longer than the spacing between the bolts.

2. An exterior rear view mirror according to claim 1, characterised in that the centre (23) of curvature of the elongated slot (22) lies in the mirror housing (1).

3. An exterior rear view mirror according to claim 1 or 2, characterised in that the two clamping pieces (12, 14) are designed to be laminar, each have a longitudinal groove (17, 19) and are screwed on to the side of the holding bracket section (2) which faces away from the mirror housing (1).

4. An exterior rear view mirror according to one of the preceding claims, characterised in that the tongue (6) projects from a supporting tube (4) to which the mirror housing (1) is secured.

5. An exterior rear view mirror according to one of the preceding claims, characterised in that the mirror housing (1) has an opening (8) through which the tongue (6) at least partially extends.

6. An exterior rear view mirror according to one of the preceding claims, characterised in that a protecting cap (32) covering the clamping pieces (12, 14), the tongue (6) and, if appropriate, the opening (8) of the mirror housing (1) is detachably secured, preferably clamped, to the mirror housing, which protecting cap has opposing openings for the holding bracket section (2).

7. An exterior rear view mirror according to one of the preceding claims, characterised in that at least the part of the section (2) which is embraced by the clamping pieces (12, 14) is surrounded by a covering (30) protecting the paint finish on the section.

**Revendications**

1. Rétroviseur extérieur pour véhicules en particulier pour camions avec un boîtier de rétroviseur (1) entourant à l'avant et latéralement un rétroviseur-réglable et avec un étrier de retenue, sur lequel le boîtier de rétroviseur est fixé au moyen de deux pièces de serrage (12, 14) enveloppant ensemble la périphérie d'une section d'étrier de retenue, les deux pièces de serrage étant fixées à un collier (6) fixé de manière inamovible sur le boîtier de rétroviseur, caractérisé en ce que les pièces de serrage (12, 14) sont fixées au collier (6) au moyen de deux boutons (27, 28) écartés dans la direction de la section d'étrier de retenue (2), qui s'étendent à travers une fente longitudinale (22) recourbée pratiquée dans les pièces de serrage (12) ou dans le collier (6) qui est plus longue que l'écart des boulons.

2. Rétroviseur extérieur selon la revendication 1, caractérisé en ce que le point central de courbure (23) de la fente longitudinale (22) est situé dans le boîtier de rétroviseur (1).

3. Rétroviseur extérieur selon la revendication 1 ou 2, caractérisé en ce que les deux pièces de serrage (12, 14) sont conçues en forme de plaque, présentent chacune un conduit longitudinal (17, 19) et sont vissées sur le côté opposé au boîtier de rétroviseur (1) de la section d'étrier de retenue (2).

4. Rétroviseur extérieur selon l'une des revendications précédentes, caractérisé en ce que le collier (6) s'écarte d'un tube porteur (4) sur lequel est fixé le boîtier de rétroviseur (1).

5. Rétroviseur extérieur selon l'une des revendications précédentes, caractérisé en ce que le boîtier de rétroviseur (1) présente une ouverture (8) à travers laquelle te collier (6) s'étend au moins partiellement.

6. Rétroviseur extérieur selon l'une des revendications précédentes, caractérisé en ce qu'un couvercle de protection (32) recouvrant les pièces de serrage (12, 14), le collier (6) ainsi que le cas échéant l'ouverture (8) du boîtier de rétroviseur (1) est fixé de manière amovible, de préférence bloqué sur te boîtier de rétroviseur, qui possède des ouvertures opposées pour la section d'étrier de retenue (2).

7. Rétroviseur extérieur selon l'une des revendications précédentes, caractérisé en ce qu'au moins la partie de la section (2) entourée par les pièces de serrage (12, 14) est entourée par une gaine (30) protégeant la peinture de la section.

Fig. 1

Schwenkbereich ±10°

Fig. 4

Fig. 3

Fig. 2

8